# EUROPEAN PATENT APPLICATION

(11) **EP 2 587 444 A1**
(43) Date of publication of application: **01.05.2013**
(21) Application number: 11786679.8
(22) Date of filing: 25.05.2011
(51) Int. Cl.: G06Q 50/00

(54) **RESOURCE MANAGEMENT SYSTEM**

(30) Priority: 25.05.2010 JP 2010119619
(71) Applicant: Panasonic Corporation, Osaka 571-8501 (JP)
(72) Inventor: KAZUNO, Hiroki, Osaka 540-6207 (JP); SOGO, Tomoya, Osaka 540-6207 (JP); NAKANO, Akio, Osaka 540-6207 (JP); KOBAYASHI, Misayo, Osaka 540-6207 (JP)
(74) Representative: Müller-Boré & Partner Patentanwälte
(86) International application number: PCT/JP2011/061995
(87) International publication number: WO 2011/148980

(57) **Abstract**

Provided are: information acquisition unit that periodically acquires usage state information of resource by load; user terminal that creates permitted usage period data; period setting unit that sets each load's permitted usage period based on permitted usage period data; determination unit that determines whether each load's resource usage is within permitted usage period; and display unit that distinctively displays whether resource usage period is within permitted usage period based on determination result by determination unit. User terminal creates single batch permitted usage period data. Period setting unit includes batch setting unit that performs batch setting whereby batch permitted usage period is set as permitted usage periods of all loads.

## Description

### TECHNICAL FIELD

The present invention relates to a resource management system used for energy saving diagnosis.

### BACKGROUND ART

A resource management system that monitors usage of power by each load (electric apparatuses, such as illumination devices and air conditioners) is used in office buildings, commercial facilities such as supermarkets, and factory buildings (predetermined spaces). The resource management system sets a permitted usage period in advance in which power usage is permitted, as an operation plan for each load, and distinctively displays whether power is used within the permitted usage period or outside the permitted usage period.

In this type of resource management system, an operation plan must be set for distinguishing a permitted usage period in which power usage is permitted, and a prohibited usage period in which power usage is prohibited. In a conventional operation plan setting, the starting time and closing time of a permitted usage period must be set for each load separately (e.g. see Cited Document 1).

Patent Document 1: Japanese Patent Application Laid-Open No. H8-50501

### SUMMARY OF INVENTION

### TECHNICAL PROBLEM

However it takes time to set the operation plan for each load separately, as mentioned above. Furthermore the operation plan must be set for all the loads of which resource usage state must be checked, but an omission may be generated in setting of the operation plan if the number of loads is high.

An omission in the setting of the operation plan could be solved by shipping the system after predetermining the initial values of an operation plan. However a resource management system is used in an office (building), a commercial facility (e.g. supermarket), a factory or the like, as mentioned above, where the operation system in each building is diversified, therefore the initial values of the operation plan cannot be uniquely determined.

With the foregoing in view, it is an object of the present invention to provide a resource management system that can easily set, without omission, the operation plan that matches the operation system of a predetermined target space for each load in the predetermined space respectively.

### SOLUTION TO PROBLEM

A source management system of the present invention is a resource management system for monitoring a usage period of a resource used in respective operations of a plurality of loads in a predetermined space, comprising: an information acquisition unit that periodically acquires information on a usage state of the resource as usage information; a data creation unit that creates data on a permitted usage period, which is a period when use of the resource is permitted; a period setting unit that sets a permitted usage period for each load based on the data on the permitted usage period created by the data creation unit; a determination unit that determines whether use of the resource corresponding to the usage information acquired by the information acquisition unit is within the permitted usage period; and a display unit that distinctively displays whether the usage period of the resource is within the permitted usage period based on the determination result by the determination unit, wherein the data creation unit creates data on a single first permitted usage period, and the period setting unit comprises a batch setting unit that performs batch setting whereby the first permitted usage period is set as the permitted usage periods of all the loads.

In this invention, it is preferable that, if one or a plurality of load groups constituted by two or more loads is formed, the batch setting unit sets a permitted usage period for each load group.

In this invention, it is preferable that the data creation unit creates data on a second permitted usage period that corresponds to each load individually, and the period setting unit comprises an individual setting unit that sets the second permitted usage period as an individual permitted usage period for each load, and the batch setting unit does not set the first permitted usage period as a permitted usage period of the load for which the second permitted usage period is set, when performing the batch setting.

In this invention, it is preferable that if the second permitted usage period which is set by the individual setting unit for a load is the same as the first permitted usage period, the batch setting unit determines that the permitted usage period set for this load is the first permitted usage period.

It is preferable that this invention further comprises a registration operation unit which is operated by a user and in which the permitted usage period setting processing by the individual setting unit is performed, and the batch setting unit determines the permitted usage period which is set by the individual setting unit via the operation by the registration operation unit, as the second permitted usage period.

In this invention, it is preferable that if the batch setting unit updates the first permitted usage period by executing the batch setting, the individual setting unit updates the second permitted usage period interlocking with the updated content of the first permitted usage period, and this invention further comprises a selected operation unit which is operated by a user to select whether the second permitted usage period is updated interlocking with the updated content of the first permitted usage period.

In this invention, it is preferable that if the batch setting unit updates a starting time of the first permitted usage period by executing the batch setting, the individual setting unit updates a starting time of the second permitted usage period interlocking with the updated content of the first permitted usage period, and if the batch setting unit updates a closing time of the first permitted usage period by executing the batch setting, the individual setting unit updates a closing time of the second permitted usage period interlocking with the updated content of the first permitted usage period.

It is preferable that the plurality of loads in the predetermined space is classified into one or a plurality of load groups. The batch setting unit sets a permitted usage period for each load group.

It is preferable that the load is an illumination load.

It is preferable that the resource management system is configured to be connected to a system. The system has a plurality of loads, whereby the usage period of the resource used in the respective operations of the plurality of loads in the predetermined space is monitored.

It is preferable that the system further has an operation device. The load is operated when the operation device is in a first state. The load is stopped when the operation device is in a second state. The resource management system further comprises a control device. The control device includes the information acquisition unit. The control device is configured to communicate with the operation device, whereby the information acquisition unit acquires information to indicate an ON/OFF state. The information to indicate the ON/OFF state indicates whether the operation device is in the first state or the second state. The control device periodically acquires the usage information based on the information to indicate the ON/OFF state.

It is preferable that the system comprises a plurality of combinations of the operation device and the load.

It is preferable that the system is defined as an illumination system. The illumination system further has a relay. The load is defined as an illumination load. The illumination load turns ON when the relay is in an ON state. The illumination load turns OFF when the relay is in an OFF state. The resource management system further comprises a relay control device. The relay control device includes the information acquisition unit. The relay control device is configured to communicate with the relay, whereby the information acquisition unit acquires information to indicate an ON/OFF state, which indicates whether the relay is in an ON state or an OFF state. The relay control device periodically acquires the usage information based on the information to indicate the ON/OFF state.

It is preferable that the illumination system comprises a plurality of combinations of the relay and the illumination load.

It is preferable that the determination unit is configured to determine whether use of the resource corresponding to the usage information acquired by the information acquisition unit is within the permitted usage period, and generate the determination result thereby. The display unit is configured to distinctively display whether or not the usage period of the resource is within the permitted usage period based on the determination result by the determination unit.

It is preferable that the data creation unit is configured to create data on a second permitted usage period that corresponds to each load individually. The period setting unit comprises an individual setting unit that sets the second permitted usage period as an individual permitted usage period for each load. The batch setting unit is configured to set the first permitted usage period for loads other than the loads for which the individual setting unit set the second permitted usage period. The load for which the first permitted usage period is set is defined as a first load. The load for which the second permitted usage period is set is defined as a second load.

It is preferable that the determination unit is configured to determine whether use of a resource corresponding to usage information acquired by the information acquisition unit is within the first permitted usage period, when the first permitted usage period is set to a permitted usage period for the first load. The determination unit is configured to generate a determination result when determining whether the usage of the resource corresponding to the use information is within the first permitted usage period. The determination unit is configured to determine whether use of the resource corresponding to the usage information acquired by the information acquisition unit is within the second permitted usage period, when the second permitted usage period is set to a permitted usage period for the second load. The determination unit is configured to generate a determination result when determining whether the usage of the resource corresponding to the use information is within the second permitted usage period.

It is preferable that if the second permitted usage period which is set by the individual setting unit for the second load is the same as the first permitted usage period, the period setting unit determines that the second permitted usage period which is set for the second load is the first permitted usage period. The determination unit is configured to generate the determination result when determining whether the use of the resource corresponding to the usage information on the second load is within the first permitted usage period.

It is preferable that the resource management system further comprises a plan storage unit. The batch setting unit associates the first permitted usage period with a load, and stores the first permitted usage period in the plan storage unit as the permitted usage period. The determination unit is configured to refer to the plan storage unit and determine whether the usage of the resource corresponding to the use information acquired by the information acquisition unit is within the permitted usage period.

### ADVANTAGEOUS EFFECTS OF INVENTION

As described above, an effect of the present invention is that an operation plan that matches the operation system of a predetermined target space can be easily set for each load in the predetermined space respectively without omission.

### BRIEF DESCRIPTION OF DRAWINGS

FIG. 1(a) and FIG. 1(b) are block diagrams depicting a system of Embodiment 1;
FIG. 2 is a block diagram depicting a configuration of a user terminal of the system;
FIG. 3 is a diagram depicting an example of a monitoring screen of the system;
FIG. 4 is a diagram depicting a monitoring screen during batch processing of the system;
FIG. 5 is a diagram depicting a monitoring screen for load groups of the system;
FIG. 6(a) to FIG. 6(c) are diagrams depicting setting processing in an individual permitted usage period of the system;
FIG. 7 is a diagram depicting a monitoring screen before updating the batch permitted usage period of the system;
FIG. 8 is a diagram depicting a monitoring screen after updating the batch permitted usage period of the system;
FIG. 9 shows a setting screen of the system; and
FIG. 10 is a diagram depicting a monitoring screen after the batch permitted usage period is updated according to Embodiment 2.

### DESCRIPTION OF EMBODIMENTS

Embodiments of the present invention will now be described with reference to the drawings.

### (Embodiment 1)

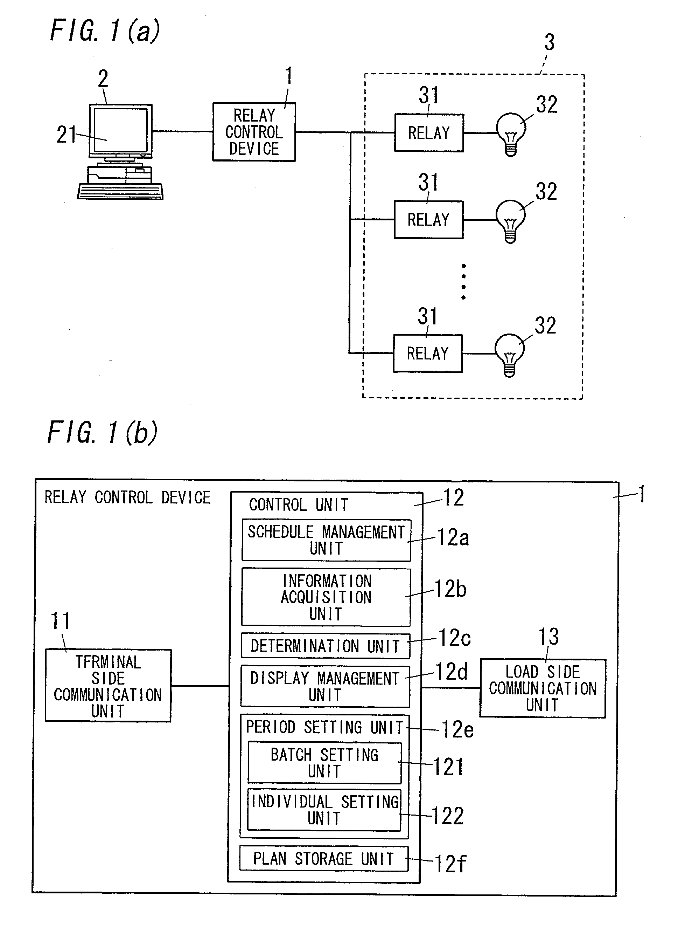

A resource management system according to Embodiment 1 is a system that monitors a usage period of a resource that is used in respective operations of a plurality of loads. As shown in FIG. 1(a), the resource management system of the present embodiment includes a relay control device 1 and a user terminal 2. An illumination system 3 is connected to the resource management system. The resource management system is a system for monitoring at least usage periods of such resources as power, gas, water and heat, and a case when the resource is power will be described here as an example.

The illumination system 3 has a plurality of combinations of a relay 31 and an illumination load 32, and each illumination load 32 turns ON or OFF according to the ON/OFF of the relay 31.

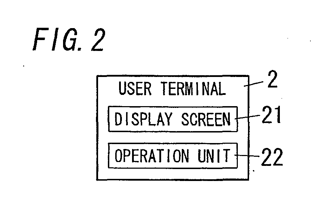

The user terminal 2 is a computer, such as a personal computer for example, and includes a display screen 21 constituted by an LCD and an operation unit 22 constituted by a keyboard, a mouse or the like, as shown in FIG. 2. The user terminal 2 displays a lighting state of each illumination load 32 collected by the relay control device 1 on the display screen 21 using a Web browser, for example. In other words, the user terminal 2 distinctively displays information on whether the usage period of power is within the permitted usable period or not, using the determination result by the later mentioned determination unit 12c. The display screen 21 corresponds to the display unit of the present invention.

The user terminal 2 displays a usage state of power for each predetermined period (e.g. 30 minutes). In the case when the predetermined period is 30 minutes, for example, if power is used for even a short time (e.g. 1 minute) out of the predetermined period, that is 30 minutes, the user terminal 2 displays as if power was used throughout the predetermined period. In other words, a case of using power for a short time, out of 30 minutes, and a case of using power throughout 30 minutes are displayed in the same manner in the section of the predetermined period on user terminal 2.

The relay control device 1 includes a terminal side communication unit 11, a control unit 12 and a load side communication unit 13, as shown in FIG. 1(b), and performs communication with each of the relays 31 based on the time division multiplexed transmission system.

The control unit 12 includes a schedule management unit 12a, an information acquisition unit 12b, a determination unit 12c, a display management unit 12d, a period setting unit 12e and a plan storage unit 12f.

The schedule management unit 12a controls lighting of the illumination load 32 by controlling ON/OFF of the relay 31 specified according to the schedule information (specified time, specified conditions) set in advance.

The information acquisition unit 12b periodically acquires the ON/OFF state of each relay 31 by periodically communicating with each relay 31 via the load side communication unit 13. In other words, the information acquisition unit 12b constantly acquires information on the ON/OFF state of each relay 31, and monitors the ON/OFF state of each relay 31. Since the ON/OFF state of the relay 31 interlocks with the lighting state of the illumination load 32, the information acquisition unit 12b monitors the lighting state of each illumination load 32 by monitoring the ON/OFF state of each relay 31. Thereby the information acquisition unit 12b can periodically acquire information on the usage state of power due to the operation of each illumination load 32 as the usage information, and monitor the power usage period.

The ON/OFF state indicates whether the relay 31, defined as the operation device, is in the ON state that is defined as the first state, or in the OFF state that is defined as a second state.

For each illumination load 32, a permitted usage period, which is a period (time slot) when use of power is permitted and the illumination load 32 can be lit, is set as an operation plan depending on the setting location or the like, and data on the permitted usage period of each illumination load 32 is stored in the plan storage unit 12f.The plan storage unit 12f corresponds to the storage unit of the present invention.

The determination unit 12c refers to the plan storage unit 12f, and determines whether the power usage period, when the relay 31 turns ON and the illumination load 32 is turned ON, is within the permitted usage period. In other words, the determination unit 12c regards the user of power within the permitted usage period as appropriate, and the user of power outside the permitted usage period as inappropriate.

Therefore the determination unit 12c is configured to determine whether the use of the resource corresponding to the usage information acquired by the information acquisition unit 12b is within the permitted usage period.

The display management unit 12d generates data (monitoring image data) for displaying the information on the lighting state of each illumination load 32 (ON/OFF state of each relay 52) on the user terminal 2, along with the determination result by the determination unit 12c, and transmits the generated monitoring image data to the user terminal 2 via the terminal side communication unit 21. The user terminal 2 displays the received monitoring image data on the display screen 21 (monitoring screen).

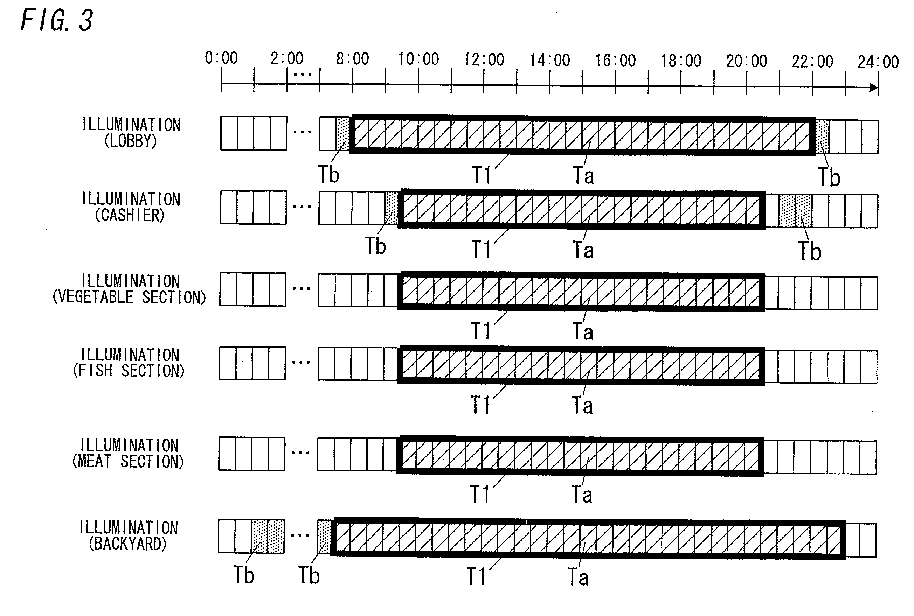

FIG. 3 is an example of the monitoring screen in a supermarket, and shows the power usage state of each illumination load 32 at 0 O'clock to 24 O'clock. An illumination load 32 is installed in each area of a lobby, cashier, vegetable section, fish section or the like in the supermarket respectively, and the power usage state is displayed for each illumination load 32.

The power usage state is displayed color-coded for each cell generated by dividing 24 hours into 30 minute units, where appropriate or inappropriate power usage in each time slot is indicated by different colors. In concrete terms, cells of a time slot, corresponding to the permitted usage period T1 of each illumination load 32, are enclosed with a frame (solid line enclosing the permitted usage period T1 in FIG. 3). Then cells corresponding to the time when the illumination load 32 used power within the permitted usage period T1 (hereafter called appropriate usage time slot Ta) and cells corresponding to the time when the illumination load 32 used power outside the permitted usage period T1 (hereafter called inappropriate usage time slot Tb) are displayed in different colors. In FIG. 3, the appropriate usage time slot Ta is indicated by diagonal lines, and the inappropriate usage time slot Tb is indicated by dots, since this is a black and white print document. Cells corresponding to the time when power is not used are blank.

Now a method for setting the permitted usage period, which is the essence of the present invention, will be described with reference to a time management system that monitors power usage periods of the illumination loads 32 in a supermarket.

It is assumed that in the initial state of the system, no data on the permitted usage periods is stored in the plan storage unit 12f. In this initial state, the user could individually create data on the permitted usage periods for each illumination load 32 by operating the operation unit 22 of the user terminal 2, and store the data in the plan storage unit 12f of the relay control device 1. However individually creating data on the permitted usage periods for all the illumination loads 32 is timing consuming, and setting of an omission could occur.

Therefore according to this embodiment, in the initial state, the user creates data on a single batch permitted usage period T11 based on the operation system of the supermarket by operating the operation unit 22 of the user terminal 2, and transmits this data on the batch permitted usage period T11 to the relay control device 1. The operation system of the supermarket refers to the business hours [opening time 10:00; closing time 19:00] of each store, and the batch permitted usage period T11 is set to a time [opening time 9:30; closing time 20:30] that includes the business hours of the stores. In other words, the business hours of the supermarket is based on the operation system of the space (predetermined space) of the supermarket, and the batch permitted usage period T11 is a permitted usage period corresponding to the space of the supermarket. The user terminal 2 corresponds to the data creation unit of the present invention.

In other words, the data creation unit defined by the user terminal 2 is configured to create data on the permitted usage period, which is a period when the use of the resource is permitted.

The period setting unit 12e of the relay control device 1 is constituted by a batch setting unit 121 and an individual setting unit 122, and the batch setting unit 121 receives data on the batch permitted usage period T11. The batch setting unit 121 regards the batch permitted usage period T11 as a permitted usage period corresponding to the space of the supermarket, and associates the batch permitted usage period T11 [opening time 9:30; closing time 20:30] with all the illumination loads 32, and stores this data in the plan storage unit 12f.The batch permitted usage period T11 corresponds to the first permitted usage period of the present invention.

In other words, the period setting unit 12e is configured to set the permitted usage period for each load based on the data on the permitted usage period created by the data creation unit. The data creation unit defined by the user terminal 2 creates data on the batch permitted usage period T11, which is defined as the single first permitted usage period.

The determination unit 12c refers to the plan storage unit 12f, and determines whether the power usage period when the relay 31 turned ON and the illumination load 32 turned ON, is within the batch permitted usage period T11.

The display management unit 12d generates monitoring image data to display information on the lighting state of each illumination load 32 (ON/OFF state of each relay 52) on the user terminal 2 along with the determination result by the determination unit 12c, and transmits the generated monitoring image data to the user terminal 2 via the terminal side communication unit 21. The user terminal 2 displays the received monitoring image data on the display screen 21 (monitoring screen).

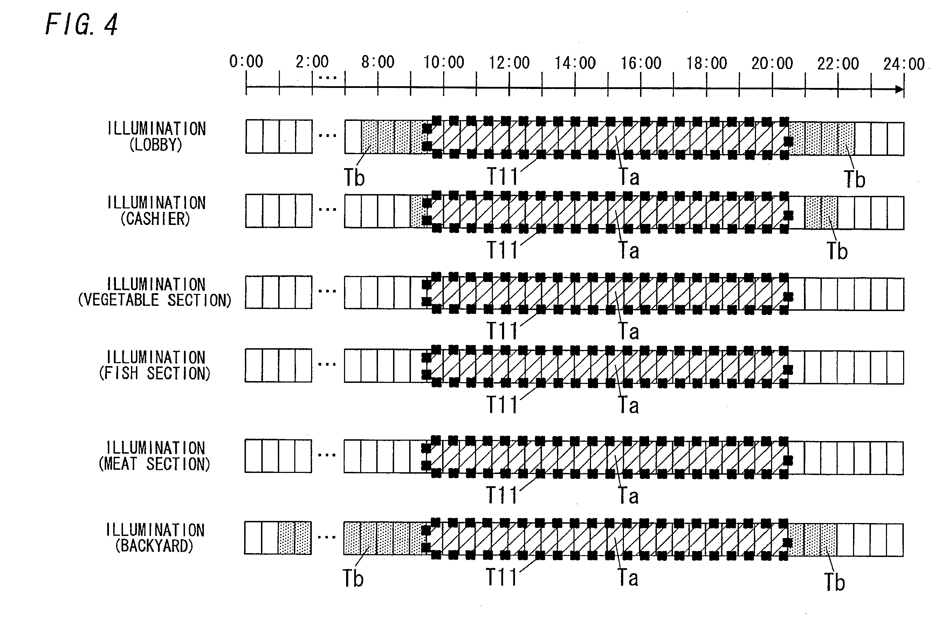

FIG. 4 is a monitoring screen when the permitted usage periods of all the illumination loads 32 are set to the batch permitted usage period T11, where all the illumination loads 32 are set to a same batch permitted usage period T11.Cells of a time slot corresponding to the batch permitted usage period T11 of each illumination load 32 are enclosed with a frame (broken line enclosing the batch permitted usage period T11 in FIG. 4). Furthermore, the appropriate usage time slot Ta in the batch permitted usage period T11 and the inappropriate usage time slot Tb outside the permitted usage period T1 are displayed in different colors.

If the operation system (opening time; closing time) of the supermarket is changed thereafter, the user operates the operation unit 22 of the user terminal 2, and transmits the data on a new batch permitted usage period T11 based on the updated operation system of the supermarket to the relay control device 1. The batch setting unit 121 of the relay control device 1 associates the new batch permitted usage period T11 with all the illumination loads 32, and updates the data in the plan storage unit 12f to this new data. In other words, if the batch permitted usage period T11 is changed, the updated batch permitted usage period T11 is set all at once in the permitted usage periods of all the illumination loads 32, hence resetting is very simple.

In this way, an identical batch permitted usage period T11 is set for the permitted usage periods of all the illumination loads 32 merely by the user creating a single batch permitted usage period T11 based on the operation system of the supermarket. Therefore the operation plan can be easily set for each of the illumination load 32 in the supermarket without omission. Furthermore, the batch permitted usage period T11 is set based on the operation system of the supermarket, so the batch permitted usage period T11 can be applied to all the illumination loads 32 in the supermarket, and the operation plan of all the illumination loads 32 can be easily set without significantly deviating from the actual lighting time slot of each illumination load 32.

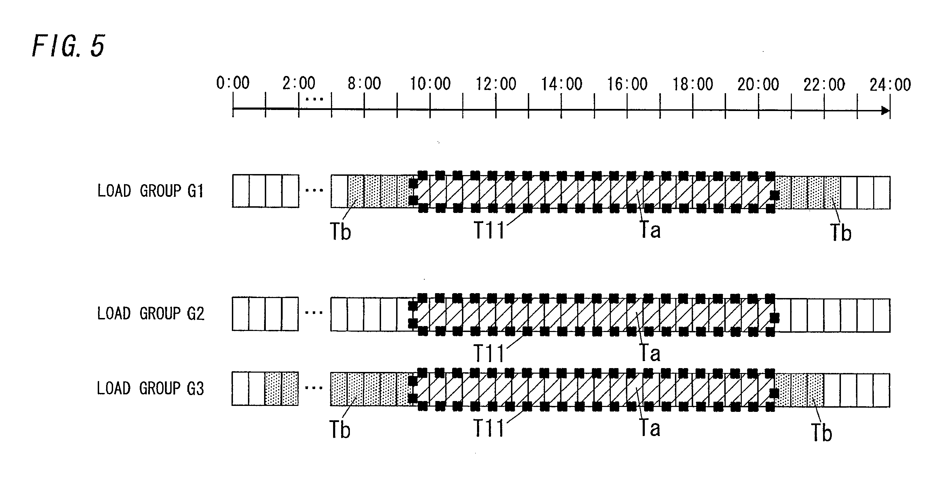

It is also possible to form a plurality of illumination loads 32 in each area into one load group G, and set a permitted usage period for each load group G. For example, FIG. 5 shows a monitoring screen when an area is each floor of an office. In FIG. 5, a plurality of illumination loads 32 installed on the first floor and the second floor of the office form a load group G1, a plurality of illumination loads 32 installed on the third floor of the office form a load group G2, and a plurality of illumination loads 32 installed on the fourth floor of the office form a load group G3. Then an identical batch permitted usage period T11 is set for all the load groups G1 to G3, whereby the batch permitted usage period T11 is set for all the illumination loads 32 belonging to the load groups G1 to G3 respectively.

In the above description, the permitted usage periods of all the illumination loads 32 are set to the identical batch permitted usage period T11 in the system in the initial state, but the permitted usage period can also be set (updated) for each illumination load 32. In this case, the user individually creates data on the permitted usage period for each illumination load 32 (hereafter called individual permitted usage period T12) by operating the operation unit 22 of the user terminal 2, and transmits the data on the individual permitted usage period T12 to the relay control device 1. The individual setting unit 122 of the relay control device 1 associates the individual permitted usage period T12 with the illumination load 32 to be updated, and updates data in the plan storage unit 12f.The individual permitted usage period T12 corresponds to the second permitted usage period of the present invention.

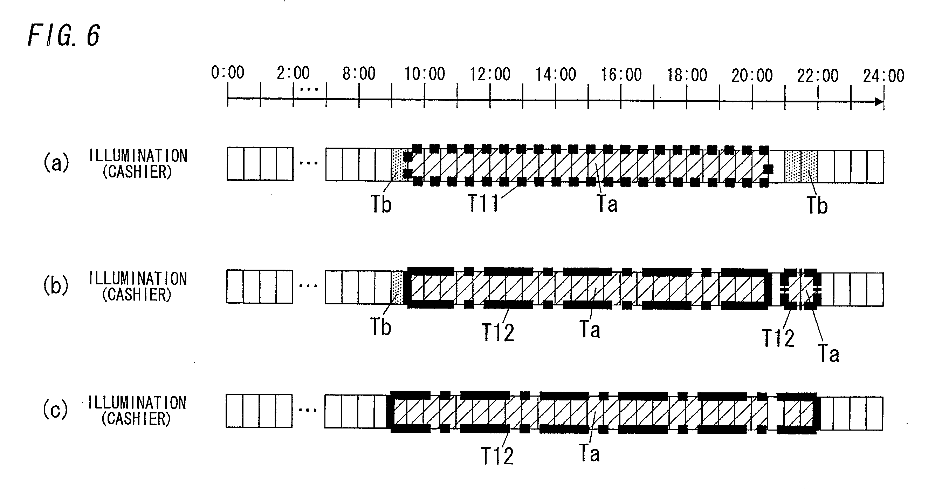

In the case when the permitted usage period of the illumination load 32 in the cashier shown in FIG. 4 is updated from the batch permitted usage period T11,for example, this processing is performed as shown in FIG. 6.

In FIG. 6(b), a new permitted usage period [starting time 21:00; closing time 22:00] is added to the current permitted usage period T11 [starting time 9:30; closing time 22:30] of the illumination load 32 in the cashier (see FIG. 6(a)) by operating the operation unit 22 of the user terminal 2. This addition processing is performed by displaying the setting screen constructed in the same way as FIG. 4 on the display screen 21 of the user terminal 2, and adding a frame to indicate the new permitted usage period to the cells of the setting target illumination load 32 on this setting screen, and the information on this setting screen is transmitted to the relay control device 1.

Then the individual setting unit 122 of the relay control device 1 creates the individual permitted usage period T12, in which the new permitted usage period [starting time 21:00; closing time 22:00] is added to the current permitted usage period [starting time 9:30; closing time 20:30] of the illumination load 32 of the cashier. Then the created individual permitted usage period T12 is associated with the illumination load 32 of the cashier, and the data of the plan storage unit 12f is updated. Hereafter on the monitoring screen and the setting screen, the cells in the time slot corresponding to the individual permitted usage period T12 of the illumination load 32 of the cashier are enclosed with a frame (a dashed line enclosing the individual permitted usage period T12 in FIG. 6(b)).

In FIG. 6(c), the current permitted usage period [starting time 9:30; closing time 20:30] of the illumination load 32 in the cashier (see FIG. 6(a)) is updated to the permitted usage period [starting time 9:00; closing time 22:00] by operating the operation unit 22 of the user terminal 2. This updating processing is performed by displaying the setting screen constructed in the same way as FIG. 4 on the display screen 21 of the user terminal 2, and dragging and extending the frame of the current permitted usage period of the setting target illumination load 32, and the information on this setting screen is transmitted to the relay control device 1.

Then the individual setting unit 122 of the relay control device 1 creates the individual permitted usage period T12 [starting time 9:00; closing time 22:00]. Then the created individual permitted usage period T12 is associated with the illumination load 32 of the cashier, and the data in the plan storage unit 12f is updated. Hereafter on the monitoring screen and the setting screen, the cells in the time slot corresponding to the individual permitted usage period T12 of the illumination load 32 of the cashier is enclosed with a frame (a dashed line enclosing the individual permitted usage period T12 in FIG. 6(c)).

By setting an individual permitted usage period T12 for an individual illumination load 32 like this, the illumination load 32, for which the individual permitted usage period T12 is set, can be handled separately from the other illumination loads 32 for which the batch permitted usage period T11 is set.

Therefore the illumination load 32 for which the batch permitted usage period T11,which is defined as the first permitted usage period, is defined as the first load. The illumination load 32 for which the individual permitted usage period T12, which is defined as the second permitted usage period, is defined as the second load.

Therefore if the batch permitted usage period T11 is updated, the batch setting unit 121 can set the updated batch permitted usage period T11 all at once only for the illumination loads 32 for which the batch permitted usage period T11 is currently set. In other words, even if the batch permitted usage period T11 is updated, an illumination load 32, for which the individual permitted usage period T12 is currently set, is not changed, and priority is assigned to the setting of the individual permitted usage period T12 based on the intention of the user.

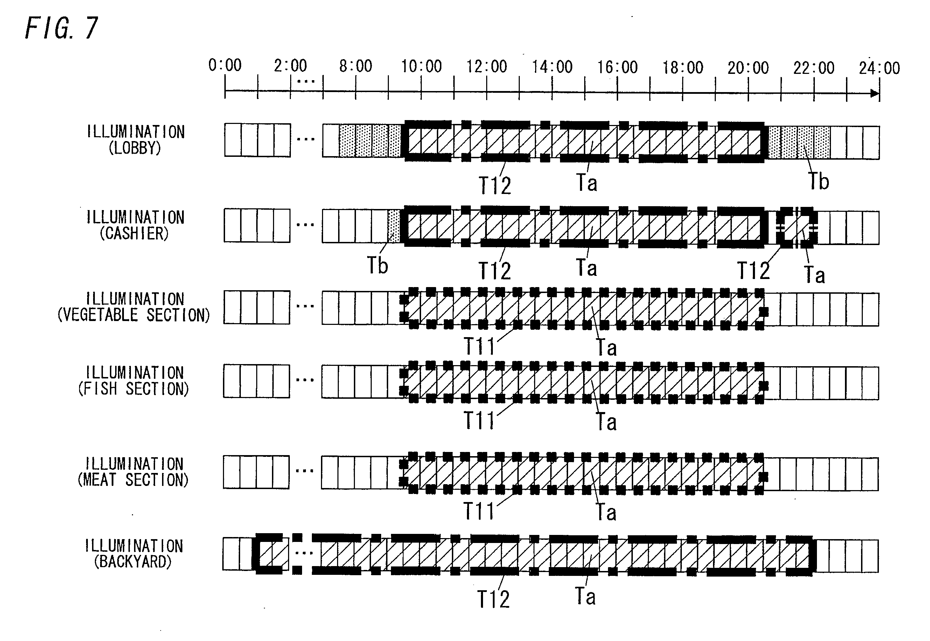

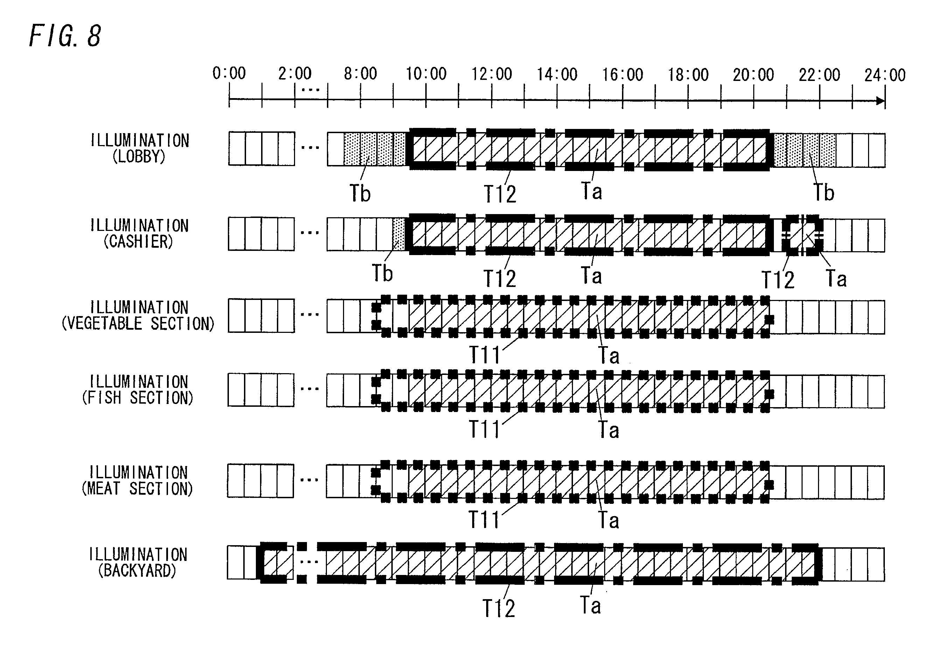

For example, FIG. 7 shows a monitoring screen before the batch permitted usage period T11 is updated, and FIG. 8 shows a monitoring screen after the batch permitted usage period T11 is updated. The batch permitted usage period T11 is set for each illumination load 32 in the vegetable section, the fish section and the meat section, and the individual permitted usage period T12 is set for each illumination load 32 in the lobby, the cashier and the backyard.

In FIG. 8, the batch permitted usage period T11 [starting time 9:30; closing time 20:30] in FIG. 7 has been updated to the batch permitted usage period T11 [starting time 8:30; closing time 20:30]. In this case, if the batch permitted usage period T11 is updated, the update is set for only the permitted usage period of each illumination load 32 in the vegetable section, the fish section and the meat section, and is not set for the permitted usage period of each illumination load 32 in the lobby, the cashier and the backyard.

Now a method for the period setting unit 12e (batch setting unit 121, individual setting unit 122) to determine whether the permitted usage period being set for each illumination load 32 is the batch permitted usage period T11 or the individual permitted usage period T12 will be described.

According to the first determination method, the period setting unit 12e determines whether the permitted usage period being set for each illumination load 32 is set in the same time slot as the batch permitted usage period T11,which was created based on the operation system of the supermarket. If the permitted usage period being set for each illumination load 32 is set in the same time slot as the batch permitted usage period T11,it is determined that this illumination load 32 is set to the batch permitted usage period T11.In other words, even in the case when the individual permitted usage period T12 is set for the permitted usage period of an illumination load 32, it is determined that the batch permitted usage period T11 is set for this illumination load 32 if the time slot of the individual permitted usage period T12 is the same as the batch permitted usage period T11.

For example, it is assumed that the individual permitted usage period T12 of the illumination load 32 is set to a same time slot as the batch permitted usage period T11 in error, because the user memorized incorrect batch permitted usage period T11 information, for example. In this case, the individual permitted usage period T12 is handled as the batch permitted usage period T11,therefore the batch permitted usage period T11 and the individual permitted usage period T12 are not set in the same time slot, and an error in setting the permitted usage period by the user, as in this case, can be prevented.

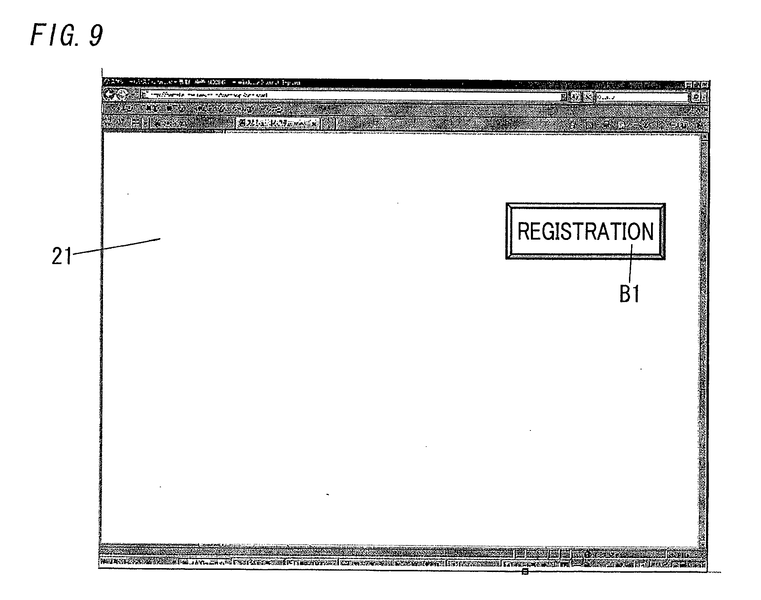

According to a second determination method, if the operation to register the individual permitted usage period T12 is performed in the user terminal 2, the period setting unit 12e handles the individual permitted usage period T12, which was set by this registration operation, separately from the batch permitted usage period T11.To perform this operation to register the individual permitted usage period T12 in the user terminal 2, the individual permitted usage period T12 is created on the setting screen of the display screen 21, and then the registration button B1, disposed on the setting screen (see FIG. 9), is pressed using the operation unit 22. In this case, the operation unit 2 corresponds to the registration operation unit of the present invention.

After the registration button B1 is pressed, the user terminal 2 transmits data on the individual permitted usage period T12 for each illumination load 32 to the relay control device 1. Then the individual setting unit 122 of the relay control device 1 associates the individual permitted usage period T12 with the illumination load 32 to be updated, and updates the data in the plan storage unit 12f. The batch setting unit 121 handles the permitted usage period, which was set by the individual setting unit 122 via the operation to register the individual permitted usage period T12 in the user terminal 2, as the individual permitted usage period T12, which is distinguished from the batch permitted usage period T11.

Therefore even if the user sets the individual permitted usage period T12 for an illumination load 32 in a same time slot as the batch permitted usage period T11,the individual permitted usage period T12 can be handled separately from the batch permitted usage period T11,assigning priority to the intention of the user.

As described above, the resource management system of this embodiment is configured to monitor the usage period of resources used in the respective operations of a plurality of loads within a predetermined space. In other words, the resource management system of the present invention is a resource management system that monitors the usage period of resources used when a plurality of loads in a predetermined space operates. The resource management system comprises the information acquisition unit 12b, the data creation unit, the period setting unit 12e, the determination unit 12c and the display unit. The information acquisition unit 12b periodically acquires information on the resource usage state as the usage information. The data creation unit is configured to create data on the permitted usage period which is a period when use of the resource is permitted. The period setting unit 12e is configured to set the permitted usage period for each load based on the data on the permitted usage period created by the data creation unit. The determination unit 12c is configured to determine whether use of the resource corresponding to the usage information acquired by the information acquisition unit 12b is within the permitted usage period. The display unit is configured to distinctively display whether the usage period of the resource is within the permitted usage period based on the determination result by the determination unit 12c. The data creation unit creates data on the single first permitted usage period. The period setting unit 12e includes the batch setting unit 121 that performs batch setting, whereby the first permitted usage period is set as the permitted usage periods of all the loads.

Thereby an operation plan matching the operation system of a predetermined target space can be easily set for each load in the predetermined space without omission.

If one or a plurality of load groups G constituted by two or more loads is formed, as shown in FIG. 5, the batch setting unit 121 sets a permitted usage period for each load group G.

Thereby an operation plan matching the operation system of a predetermined target space can be set for each load group G.

The data creation unit creates data on the second permitted usage period that corresponds to each load individually, as shown in FIG. 6. The period setting unit 12e includes the individual setting unit 122 that sets the second permitted usage period as an individual permitted usage period for each load. The batch setting unit 121 does not set the first permitted usage period as a permitted usage period of the load for which the second permitted usage period is set, when performing the batch setting.

Thereby the batch permitted usage period T11 is not set for a load for which the second permitted usage period is set. In other words, the batch permitted usage period T11 is not applied to a load for which the second permitted usage period is set.

If the second permitted usage period, which the individual setting unit 122 sets for a load, is the same as the first permitted usage period, the batch setting unit 121 determines that the permitted usage period set for this load is the first permitted usage period.

In this case, this individual permitted usage period T12 is handled as the batch permitted usage period T11,hence the batch permitted usage period T11T11 and the individual permitted usage period T12T12 are not set in a same time slot, and a setting error of the permitted usage period by the user, as mentioned above, can be prevented.

The resource management system includes a registration operation unit 2 which is operated by the user, and in which the permitted usage period setting processing by the individual setting unit 122 is performed. The batch setting unit 121 determines the permitted usage period which the individual setting unit 122 set via the operation by the registration operation unit 2 as the second permitted usage period.

In this case, even if the user sets the individual permitted usage period T12 for a load in a same time slot as the batch permitted usage period T11,the individual permitted usage period T12 can be handled separately from the batch permitted usage period T11,giving priority to the intention of the user.

The plurality of loads in the predetermined space is classified into one or a plurality of load groups G. The batch setting unit 121 sets a permitted usage period for each load group G.

Thereby an operation plan matching the operation system of the predetermined target space can be set for each load group G.

Here the load is an illumination load 32. However load is not limited to the illumination load 32.

The resource management system is configured to be connected to the system. The system has a plurality of loads, whereby the usage period of the resource used in the respective operations of the plurality of loads in the predetermined space is monitored.

In this embodiment, the system has the relay 31 and the illumination load 32. However the system may have a load instead of the illumination load 32. The system can have an operation device instead of the relay 31.

In other words, the system further comprises an operation device. The load is operated when the operation device is in the first state. The load is stopped when the operation device is in the second state. The resource management system further comprises a control device. The control device has the information acquisition unit 12b. The control device is configured to communicate with the operation device, whereby the information acquisition unit 12b acquires information to indicate an ON/OFF state. The information to indicate the ON/OFF state indicates whether the operation device is in the first state or the second state. The control device periodically acquires the usage information based on the information to indicate the ON/OFF state.

The system includes a plurality of combinations of the operation device and the load.

The system is defined by an illumination system. The illumination system includes a relay 31. The load is defined as an illumination load 32. The illumination load 32 turns ON when the relay 31 is in the ON state. The illumination load 32 turns OFF when the relay 31 is in the OFF state. The resource management system further comprises the relay control device 1. The relay control device 1 includes the information acquisition unit 12b. The relay control device 1 is configured to communicate with the relay 31, whereby the information acquisition unit 12b acquires information to indicate the ON/OFF state that indicates whether the relay 31 is in the ON state or the OFF state. The relay control device 1 periodically acquires the usage information based on the information to indicate the ON/OFF state.

The illumination system includes a plurality of combinations of the relay 31 and the illumination load 32.

The determination unit 12c is configured to determine whether use of the resource corresponding to the usage information acquired by the information acquisition unit 12b is within the permitted usage period, and thereby generate the determination result. The display unit is configured to distinctively display whether the usage period of the resource is within the permitted usage period based on the determination result by the determination unit 12c.

The data creation unit is configured to create data on the second permitted usage period which corresponds to each load individually. The period setting unit 12e includes the individual setting unit 122 that sets the second permitted usage period for an individual permitted usage period for each load. The batch setting unit 121 is configured to set the first permitted usage period for loads other than the loads for which the individual setting unit 122 set the second permitted usage period. The load for which the first permitted usage period is set is defined as the first load. The load for which the second permitted usage period is set is defined as the second load.

The determination unit 12c is configured to determine whether use of a resource corresponding to usage information acquired by the information acquisition unit 12b is within the first permitted usage period, when the period setting unit 12e sets the first permitted usage period to a permitted usage period for the first load. The determination unit 12c is configured to generate a determination result when determining whether the use of the resource for the first load corresponding to the usage information is within the first permitted usage period. The determination unit 12c is configured to determine whether use of a resource corresponding to usage information acquired by the information acquisition unit 12b is within the second permitted usage period, when the period setting unit 12e sets the second permitted usage period to a permitted usage period for the second load. The determination unit 12c is configured to generate a determination result when determining whether the use of the resource corresponding to the usage information for the second load is within the second permitted usage period.

If the second permitted usage period which the individual setting unit 122 set for the second load is the same as the first permitted usage period, the period setting unit 12e determines that the second permitted usage period, which is set for the second load, is the first permitted usage period. The determination unit 12c is configured to generate the determination result when determining whether the use of the resource corresponding to the usage information on the second load is within the first permitted usage period.

The resource management system further comprises the plan storage unit 12f.The batch setting unit 121 associates the first permitted usage period with a load, and stores the first permitted usage period in the plan storage unit 12f as the permitted usage period. The determination unit 12c is configured to refer to the plan storage unit 12f, and determine whether the use of the resource corresponding to the usage information acquired by the information acquisition unit 12b is within the permitted usage period.

### (Embodiment 2)

A resource management system according to Embodiment 2 has the configuration shown in FIG. 1 and FIG. 2, just like Embodiment 1, and a same composing element as Embodiment 1 is denoted with a same reference symbol, for which description is omitted.

In Embodiment 1, even if the batch permitted usage period T11 is updated by the batch setting unit 121, the illumination load 32, for which the individual permitted usage period T12 is set at the moment, is not updated.

In Embodiment 2 however, if the batch setting unit 121 updates the batch permitted usage period T11,the individual setting unit 122 updates the individual permitted usage period T12 interlocking with the updated content of the batch permitted usage period T11 (interlocking setting). This interlocking setting is implemented by the user operating the operation unit 22 of the user terminal 2, and sending an interlocking instruction command to the relay control device 1, and the individual setting unit 122 of the relay control device 1 receiving the interlocking instruction command. In this case, the operation unit 2 corresponds to the selection operation unit of the present invention.

The interlocking instruction command is constituted by three selection items: "interlocking setting is executed/not executed", "starting time is a subject/not a subject", and "closing time is a subject/not a subject". The user sets these three selection items by operating the operation unit 2 of the user terminal 2.

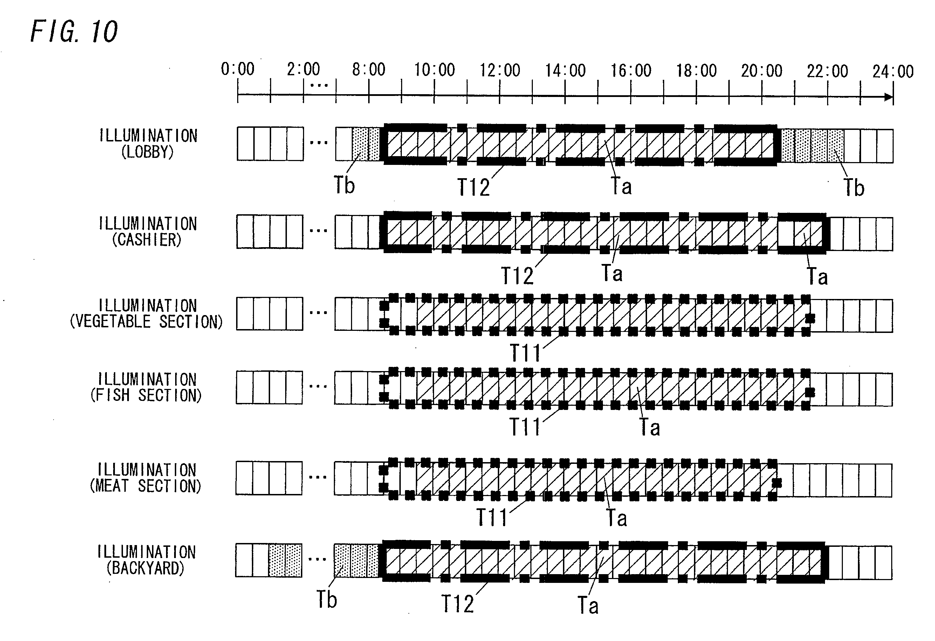

FIG. 7 is a monitoring screen before the batch permitted usage period T11 is updated, and FIG. 10 is a monitoring screen after the batch permitted usage period T11 is updated. The batch permitted usage period T11 is set for each illumination load 32 of the vegetable section, the fish section and the meat section, and the individual permitted usage period T12 is set for each illumination load 32 of the lobby, the cashier and the backyard.

In FIG. 10, the batch permitted usage period T11 [starting time 9:30; closing time 20:30] in FIG. 7 has been updated to the batch permitted usage period T11 [starting time 8:30; closing time 21:30]. If the interlocking instruction command is set to "interlocking setting is executed", "starting time is a subject" and "closing time is not a subject" when the batch setting unit 121 updated the batch permitted usage period T11,the individual control unit 122 executes the following interlocking setting; for each illumination load 32 of the lobby, the cashier and the backyard for which the individual permitted usage period T12 is set, and the starting time of the individual permitted usage period T12 is updated to the starting time 8:30, that is, the starting time of the updated batch permitted usage period T11 (see FIG. 10).

If the interlocking instruction command is set to "interlocking setting is executed", "starting time is not a subject" and "closing time is a subject" when the batch setting unit 121 updated the batch permitted usage period T11, the individual control unit 122 executes the following interlocking setting; for each illumination load 32 of the lobby, the cashier and the backyard for which the individual permitted usage period T12 is set, and the closing time of the individual permitted usage period T12 is updated to the closing time 21:30, that is, the closing time of the updated batch permitted usage period T11.

If the interlocking instruction command is set to "interlocking setting is executed", "starting time is a subject" and "closing time is a subject" when the batch setting unit 121 updated the batch permitted usage period T11,the individual control unit 122 executes the following interlocking setting; for each illumination load 32 of the lobby, the cashier and the backyard for which the individual permitted usage period T12 is set, and the starting time of the individual permitted usage period T12 is updated to the starting time 8:30, that is, the starting time of the updated batch permitted usage period T11. The closing time of the individual permitted usage period T12 is also updated to the closing time 21:30, that is, the closing time of the updated batch permitted usage period T11.

If the interlocking instruction command is set to "interlocking setting is not executed", the individual control unit 122 does not execute the interlocking setting.

In this way, when the user updated the batch permitted usage period T11,the user can execute the interlocking setting if they wish, so that the individual permitted usage period T12 is updated as well based on the batch permitted usage period T11. Since the starting time or the closing time of the individual permitted usage period T12 is matched with the starting time or the closing time of the batch permitted usage period T11 based on the absolute time, the user can operate with clear understanding.

In the above embodiments, the resource is not limited to power (quantity of electricity), but may be water, gas or heat, and the permitted usage periods can be set for these resources in the same way.

For example, if the resource is water or gas, a water pipe or gas pipe for supplying water or gas is installed in each area in such a building as an office, store or the like. The usage state (use/nonuse) of water or gas can be monitored by installing a valve for opening/closing the flow passage of water or gas in the water pipe or gas pipe, and monitoring the open/close state of the valve. If the resource is heat as well, the usage state (use/nonuse) of heat can be monitored by installing a valve for opening/closing the flow passage of the heat medium, and monitoring the open/close state of the valve.

As described above, Embodiment 2 has a similar configuration as Embodiment 1.

Therefore the resource management system of this embodiment is configured to monitor the usage period of resources used in the respective operations of a plurality of loads within a predetermined space. In other words, the resource management system of the present invention is a resource management system that monitors the usage period of resources used when a plurality of loads in a predetermined space operates. The resource management system comprises the information acquisition unit 12b, the data creation unit, the period setting unit 12e, the determination unit 12c and the display unit. The information acquisition unit 12b periodically acquires information on the resource usage state as the usage information. The data creation unit is configured to create data on the permitted usage period which is a period when use of the resource is permitted. The period setting unit 12e is configured to set the permitted usage period for each load based on the data on the permitted usage period created by the data creation unit. The determination unit 12c is configured to determine whether use of the resource corresponding to the usage information acquired by the information acquisition unit 12b is within the permitted usage period. The display unit is configured to distinctively display whether the usage period of the resource is within the permitted usage period based on the determination result by the determination unit 12c. The data creation unit creates data on a single first permitted usage period. The period setting unit 12e includes the batch setting unit 121 that performs batch setting, whereby the first permitted usage period is set as the permitted usage periods of all the loads.

Thereby an operation plan matching the operation system of a predetermined target space can be easily set for each load in the predetermined space without omission.

If one or a plurality of load groups G constituted by two or more loads is formed, as shown in FIG. 5, the batch setting unit 121 sets a permitted usage period for each load group G.

Thereby an operation plan matching the operation system of a predetermined target space can be set for each load group G.

The data creation unit creates data on the second permitted usage period that corresponds to each load individually, as shown in FIG. 6. The period setting unit 12e includes the individual setting unit 122 that sets the second permitted usage period as an individual permitted usage period for each load. The batch setting unit 121 does not set the first permitted usage period as a permitted usage period of the load for which the second permitted usage period is set, when performing the batch setting.

Thereby the batch permitted usage period T11 is not set for a load for which the second permitted usage period is set. In other words, the batch permitted usage period T11 is not applied to a load for which the second permitted usage period is set.

If the second permitted usage period, which the individual setting unit 122 sets for a load, is the same as the first permitted usage period, the batch setting unit 121 determines that the permitted usage period set for this load is the first permitted usage period.

In this case, this individual permitted usage period T12 is handled as the batch permitted usage period T11, hence the batch permitted usage period T11T11 and the individual permitted usage period T12T12 are not set in a same time slot, and a setting error of the permitted usage period by the user, as mentioned above, can be prevented.

The resource management system includes a registration operation unit 2 which is operated by the user, and in which the permitted usage period setting processing by the individual setting unit 122 is performed. The batch setting unit 121 determines the permitted usage period which the individual setting unit 122 set via the operation by the registration operation unit 2 as the second permitted usage period.

In this case, even if the user sets the individual permitted usage period T12 for a load in a same time slot as the batch permitted usage period T11,the individual permitted usage period T12 can be handled separately from the batch permitted usage period T11,giving priority to the intention of the user.

If the batch setting unit 121 updates the first permitted usage period by executing the batch setting, the individual setting unit 122 updates the second permitted usage period interlocking with the updated content of the first permitted usage period. The selected operation unit which is operated by the user to select whether the second permitted usage period is updated interlocking with the updated content of the first permitted usage period, is included.

If the batch setting unity 121 updates the starting time of the first permitted usage period by executing the batch setting, the individual setting unit 122 updates the starting time of the second permitted usage period interlocking with the updated content of the first permitted usage period. If the batch setting unit 121 updates the closing time of the first permitted usage period by executing the batch setting, the individual setting unit 122 updates the closing time of the second permitted usage period interlocking with the updated content of the first permitted usage period.

In this case, if the user updated the batch permitted usage period T11T11, the user can execute the interlocking setting if they wish, so that the individual permitted usage period T12T12 is updated as well based on the batch permitted usage period T11T11. Since the starting time or the closing time of the individual permitted usage period T12T12 is matched with the starting time or the closing time of the batch permitted usage period T11T11 based on the absolute time, the user can operate with clear understanding.

### REFERENCE SIGNS LIST

| | |
|---|---|
| 1 | relay control device |
| 12 | control unit |
| 12a | schedule management unit |
| 12b | information acquisition unit |
| 12c | determination unit |
| 12d | display management unit |
| 12e | period setting unit |
| 12f | plan storage unit |
| 121 | batch setting unit |
| 122 | individual setting unit |
| 2 | user terminal |
| 21 | display screen |
| 22 | operation unit |
| 3 | illumination system |
| 31 | relay |
| 32 | illumination load |

## Claims

1. A resource management system for monitoring a usage period of a resource used in respective operations of a plurality of loads in a predetermined space, comprising:
an information acquisition unit that periodically acquires information on a usage state of the resource as usage information;
a data creation unit that creates data on a permitted usage period, which is a period when use of the resource is permitted;
a period setting unit that sets a permitted usage period for each load based on the data on the permitted usage period created by the data creation unit;
a determination unit that determines whether use of the resource corresponding to the usage information acquired by the information acquisition unit is within the permitted usage period; and
a display unit that distinctively displays whether the usage period of the resource is within the permitted usage period based on the determination result by the determination unit, wherein
the data creation unit creates data on a single first permitted usage period, and
the period setting unit comprises a batch setting unit that performs batch setting whereby the first permitted usage period is set as the permitted usage periods of all the loads.

2. The resource management system according to Claim 1, wherein if one or a plurality of load groups constituted by two or more loads is formed, the batch setting unit sets a permitted usage period for each load group.

3. The resource management system according to Claim 1 or 2, wherein
the data creation unit creates data on a second permitted usage period that corresponds to each load individually, and
the period setting unit comprises an individual setting unit that sets the second permitted usage period as an individual permitted usage period for each load, and the batch setting unit does not set the first permitted usage period as a permitted usage period of the load for which the second permitted usage period is set, when performing the batch setting.

4. The resource management system according to Claim 3, wherein if the second permitted usage period which is set by the individual setting unit for a load is the same as the first permitted usage period, the batch setting unit determines that the permitted usage period set for this load is the first permitted usage period.

5. The resource management system according to Claim 3, further comprising:
a registration operation unit which is operated by a user and in which the permitted usage period setting processing by the individual setting unit is performed, and
the batch setting unit determines the permitted usage period which is set by the individual setting unit via the operation by the registration operation unit, as the second permitted usage period.

6. The resource management system according to any one of Claims 3 to 5, wherein
if the batch setting unit updates the first permitted usage period by executing the batch setting, the individual setting unit updates the second permitted usage period interlocking with the updated content of the first permitted usage period, and
the resource management system further comprises a selected operation unit which is operated by a user to select whether the second permitted usage period is updated interlocking with the updated content of the first permitted usage period.

7. The resource management system according to Claim 6, wherein
if the batch setting unit updates a starting time of the first permitted usage period by executing the batch setting, the individual setting unit updates a starting time of the second permitted usage period interlocking with the updated content of the first permitted usage period, and
if the batch setting unit updates a closing time of the first permitted usage period by executing the batch setting, the individual setting unit updates a closing time of the second permitted usage period interlocking with the updated content of the first permitted usage period.

8. The resource management system according to Claim 1, wherein
the plurality of loads in the predetermined space is classified into one or a plurality of load groups, and
the batch setting unit sets a permitted usage period for each load group.

9. The resource management system according to Claim 1, wherein the load is an illumination load.

10. The resource management system according to Claim 1, wherein
the resource management system is configured to be connected to a system, and
the system has a plurality of loads, whereby the usage period of the resource used in the respective operations of the plurality of loads in the predetermined space is monitored.

11. The resource management system according to Claim 10, wherein
the system further has an operation device,
the load is operated when the operation device is in a first state,
the load is stopped when the operation device is in a second state,
the resource management system further comprises a control device,
the control device includes the information acquisition unit,
the control device is configured to communicate with the operation device, whereby the information acquisition unit acquires information to indicate an ON/OFF state,
the information to indicate the ON/OFF state indicates whether the operation device is in the first state or the second state, and
the control device periodically acquires the usage information based on the information to indicate the ON/OFF state.

12. The resource management system according to Claim 11, wherein
the system comprises a plurality of combinations of the operation device and the load.

13. The resource management system according to Claim 10, wherein
the system is defined as an illumination system,
the illumination system further has a relay,
the load is defined as an illumination load,
the illumination load turns ON when the relay is in an ON state,
the illumination load turns OFF when the relay is in an OFF state,
the resource management system further comprises a relay control device,
the relay control device includes the information acquisition unit,
the relay control device is configured to communicate with the relay, whereby the information acquisition unit acquires information to indicate an ON/OFF state, which indicates whether the relay is in an ON state or an OFF state, and
the relay control device periodically acquires the usage information based on the information to indicate the ON/OFF state.

14. The resource management system according to Claim 13, wherein
the illumination system comprises a plurality of combinations of the relay and the illumination load.

15. The resource management system according to Claim 1, wherein
the determination unit is configured to determine whether use of the resource corresponding to the usage information acquired by the information acquisition unit is within the permitted usage period, and thereby generate the determination result, and
the display unit is configured to distinctively display whether the usage period of the resource is within the permitted usage period based on the determination result by the determination unit.

16. The resource management system according to Claim 1, wherein
the data creation unit is configured to create data on a second permitted usage period that corresponds to each load individually,
the period setting unit comprises an individual setting unit that sets the second permitted usage period as an individual permitted usage period for each load,
the batch setting unit is configured to set the first permitted usage period for loads other than the loads for which the individual setting unit set the second permitted usage period,
the load for which the first permitted usage period is set is defined as a first load, and
the load for which the second permitted usage period is set is defined as a second load.

17. The resource management system according to Claim 16, wherein
the determination unit is configured to determine whether use of a resource corresponding to usage information acquired by the information acquisition unit is within the first permitted usage period, when the period setting unit sets the first permitted usage period to a permitted usage period for the first load,
the determination unit is configured to generate a determination result when determining whether the use of the resource corresponding to the usage information is within the first permitted usage period,
the determination unit is configured to determine whether use of the resource corresponding to the usage information acquired by the information acquisition unit is within the second permitted usage period, when the period setting unit sets the second permitted usage period to a permitted usage period for the second load, and
the determination unit is configured to generate a determination result when determining whether the use of the resource corresponding to the usage information is within the second permitted usage period.

18. The resource management system according to Claim 17, wherein
if the second permitted usage period which is set by the individual setting unit for the second load is the same as the first permitted usage period, the period setting unit determines that the second permitted usage period which is set for the second load is the first permitted usage period, and
the determination unit is configured to generate the determination result when determining whether the use of the resource corresponding to the usage information on the second load is within the first permitted usage period.

19. The resource management system according to Claim 1, further comprising a plan storage unit,
wherein the batch setting unit associates the first permitted usage period with a load, and stores the first permitted usage period in the plan storage unit as the permitted usage period, and
the determination unit is configured to refer to the plan storage unit and determine whether the use of the resource corresponding to the usage information acquired by the information acquisition unit is within the permitted usage period.
